(19) Europäisches Patentamt
European Patent Office
Office européen des brevets

(11) **EP 2 094 545 B1**

(12) **EUROPÄISCHE PATENTSCHRIFT**

(45) Veröffentlichungstag und Bekanntmachung des Hinweises auf die Patenterteilung:
**31.03.2010   Patentblatt 2010/13**

(21) Anmeldenummer: **07821640.5**

(22) Anmeldetag: **22.10.2007**

(51) Int Cl.:
**B60T 8/172** *(2006.01)*

(86) Internationale Anmeldenummer:
**PCT/EP2007/061276**

(87) Internationale Veröffentlichungsnummer:
**WO 2008/061852 (29.05.2008 Gazette 2008/22)**

(54) **VERFAHREN UND VORRICHTUNG ZUM SCHÄTZEN EINER REIBKENNZAHL**

METHOD AND DEVICE FOR ESTIMATING A FRICTION COEFFICIENT

PROCÉDÉ ET DISPOSITIF POUR ESTIMER UN COEFFICIENT DE FRICTION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.11.2006   DE 102006054805**

(43) Veröffentlichungstag der Anmeldung:
**02.09.2009   Patentblatt 2009/36**

(73) Patentinhaber: **Continental Automotive GmbH
30165 Hannover (DE)**

(72) Erfinder:
• **BIAN, Ning
65760 Eschborn (DE)**
• **GAMULESCU, Celine
93049 Regensburg (DE)**
• **MAYER, Andreas
93049 Regensburg (DE)**
• **FIEDLER, Jens
93107 Thalmassing (DE)**

(56) Entgegenhaltungen:
**DE-A1- 3 912 014     DE-B4- 19 549 715**

• **RAY L R: "NONLINEAR STATE AND TIRE FORCE ESTIMATION FOR ADVANCED VEHICLE CONTROL" IEEE TRANSACTIONS ON CONTROL SYSTEMS TECHNOLOGY, IEEE SERVICE CENTER, NEW YORK, NY, US, Bd. 3, Nr. 1, 1. März 1995 (1995-03-01), Seiten 117-124, XP000508619 ISSN: 1063-6536**

**Beschreibung**

Die Erfindung betrifft ein Verfahren und eine entsprechende Vorrichtung zum Schätzen einer Reibkennzahl zwischen mindestens einem Reifen eines Fahrzeugs und einer Fahrbahn.

Die DE 39 120 14 A1 offenbart ein Verfahren zum Ermitteln eines Reibwerts zwischen einer Fahrbahn und Reifen eines Fahrzeugs. Bei Annäherung an einen querdynamisch kritischen Fahrzustand werden jeweils Werte für einen Lenkwinkel, eine Fahrgeschwindigkeit, eine Gierwinkelgeschwindigkeit und eine Querbeschleunigung des Fahrzeugs erfasst oder ermittelt. In Abhängigkeit vom Lenkwinkel und von der Fahrgeschwindigkeit wird anhand eines mathematischen Fahrzeugreferenzmodells eine Referenz- oder Sollgierwinkelgeschwindigkeit ermittelt. Ferner wird eine Differenz zwischen der tatsächlichen Gierwinkelgeschwindigkeit des Fahrzeugs und der Referenz- oder Sollgierwinkelgeschwindigkeit ermittelt. Es wird derjenige Wert der Querbeschleunigung als Maß für den Reibwert zwischen der Fahrbahn und den Reifen des Fahrzeugs ermittelt, bei dem die Differenz zwischen der tatsächlichen Gierwinkelgeschwindigkeit und der Referenz- oder Sollgierwinkelgeschwindigkeit stark anzusteigen beginnt.

Die EP 1 627 790 A1 offenbart ein Verfahren zum Schätzen eines Reibungskoeffizienten. Ein Lenkwinkel und eine Querbeschleunigung werden erfasst. Ein Schätzwert des Reibungskoeffizienten wird mittels einer Tabelle ermittelt. In der Tabelle sind mehrere Bereiche für unterschiedliche Lenkwinkel und Querbeschleunigungen vorgesehen, denen mehrere Reibungskoeffizienten zugeordnet sind. Abhängig vom erfassten Lenkwinkel und der erfassten Querbeschleunigung wird der zugehörige Bereich der Tabelle ausgewählt und der zugeordnete Reibungskoeffizient als Schätzwert des Reibungskoeffizienten genutzt.

Die Aufgabe der Erfindung ist, ein Verfahren und eine entsprechende Vorrichtung zum Schätzen einer Reibkennzahl zu schaffen, das bzw. die zuverlässig ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren und eine entsprechende Vorrichtung zum Schätzen einer Reibkennzahl zwischen mindestens einem Reifen eines Fahrzeugs und einer Fahrbahn. Ein Schräglaufwinkel wird erfasst oder ermittelt. Ein lateraler Reibwert zwischen mindestens einen Reifen des Fahrzeugs und der Fahrbahn wird mittels eines Modells ermittelt, in dem ein funktionaler Zusammenhang zwischen dem lateralen Reibwert und dem Schräglaufwinkel derart vorgegeben ist, dass ein nichtlinearer Verlauf des lateralen Reibwerts in Bezug auf den Schräglaufwinkel abhängig ist von einer Anfangssteigung des lateralen Reibwerts in Bezug auf den Schräglaufwinkel und von einem rekursiv ermittelten Schätzwert der Reibkennzahl. Ferner ist der funktionale Zusammenhang derart vorgegeben, dass die Anfangssteigung im Wesentlichen unabhängig vom rekursiv ermittelten Schätzwert der Reibkennzahl ist. Ferner wird eine fahrdynamische Messgröße des Fahrzeugs erfasst. Abhängig vom lateralen Reibwert wird eine der fahrdynamischen Messgröße entsprechende fahrdynamische Modellgröße ermittelt. Ferner wird eine Abweichung zwischen der fahrdynamischen Messgröße und der fahrdynamischen Modellgröße ermittelt. Die Rekursion beim Ermitteln des Schätzwerts der Reibkennzahl umfasst, dass dieser abhängig von der ermittelten Abweichung angepasst wird.

Der Schräglaufwinkel ist definiert als der Winkel zwischen einer Radebene, die senkrecht zu einer Radachse steht, und einer Bewegungsrichtung eines Berührbereichs, in dem sich der Reifen und die Fahrbahn berühren. Der laterale Reibwert ist definiert als Quotient aus einer auf den Reifen wirkenden Querkraft und einer Aufstandskraft des Reifens auf der Fahrbahn. Die Reibkennzahl charakterisiert die Reibung zwischen Reifen und Fahrbahn und ist definiert als Quotient aus einer maximal vom Reifen auf die Fahrbahn übertragbaren Kraft in Richtung parallel zur Fahrbahn und der Aufstandskraft oder als ein Grenzwert dieses Quotienten für große Schlupfwerte.

Unter der Anfangssteigung ist eine Steigung einer für den lateralen Reibwert über den Schräglaufwinkel aufgetragenen Kurve für betragsmäßig kleine Schräglaufwinkel zu verstehen. Insbesondere entspricht die Anfangssteigung einem Grenzwert der Steigung der Kurve für gegen Null gehende Schräglaufwinkel.

Die fahrdynamische Messgröße und die fahrdynamische Modellgröße beziehen sich beispielsweise auf eine Querbeschleunigung oder eine Gierrate des Fahrzeugs oder auf eine andere geeignete Größe, die mittels Sensoren erfassbar oder aus erfassten Messwerten ermittelbar ist und im Rahmen des Modells abhängig vom lateralen Reibwert ermittelbar ist.

Die Erfindung beruht auf der Erkenntnis, dass die Schätzung der Reibkennzahl besonders robust und zuverlässig erfolgt, wenn für das Ermitteln des lateralen Reibwerts ein Modell genutzt wird, bei dem die Anfangssteigung des lateralen Reibwerts in Bezug auf den Schräglaufwinkel im Wesentlichen unabhängig vom rekursiv ermittelten Schätzwert der Reibkennzahl vorgegeben ist und insbesondere konstant vorgegeben ist. Aufgrund des funktionalen Zusammenhangs zwischen dem lateralen Reibwert und dem Schräglaufwinkel gemäß dem Modell ist der nichtlineare Verlauf des lateralen Reibwerts in Bezug auf den Schräglaufwinkel somit weitgehend vorgegeben und ist im Wesentlichen nur noch abhängig vom Schätzwert der Reibkennzahl. Änderungen der Reibkennzahl sind so einfach und zuverlässig erkennbar.

In einer vorteilhaften Ausgestaltung ist der funktionale Zusammenhang im Modell durch $\mu\_T = C1 \cdot (1 - \exp(-C2 \cdot S)) - C3 \cdot S$ mit $S = \sqrt{2 \cdot (1 - \cos(\alpha))}$ und $C1 = \mu\_R \cdot C1\_0$ und $C2 = C2\_0 / \mu\_R$ mit einer ersten und einer zweiten Konstanten vorgegeben. Das Nutzen dieses funktionalen Zusammenhangs für das Ermitteln des lateralen Reibwerts hat den Vorteil, dass der laterale Reibwert auf diese Weise einfach ermittelbar ist und die Anfangssteigung des lateralen Reibwerts in Bezug auf den Schräglaufwinkel im Wesentlichen unabhängig vom rekursiv ermittelten Schätzwert der Reibkennzahl ist und ferner im Wesentlichen konstant ist. Dies ermöglicht ein zuverlässiges und präzises Schätzen der Reibkennzahl.

Ausführungsbeispiele der Erfindung sind im Folgenden anhand der schematischen Zeichnungen erläutert. Es zeigen:

Figur 1     ein Fahrzeug,

Figur 2     eine Vorrichtung zum Schätzen einer Reibkennzahl,

Figur 3     ein erstes Diagramm eines lateralen Reibwerts,

Figur 4     ein zweites Diagramm des lateralen Reibwerts mit einem vergrößerten Ausschnitt des ersten Diagramms gemäß Figur 3 und

Figur 5     ein Ablaufdiagramm für das Schätzen der Reibkennzahl.

Elemente gleicher Konstruktion oder Funktion sind figurenübergreifend mit den gleichen Bezugszeichen versehen.

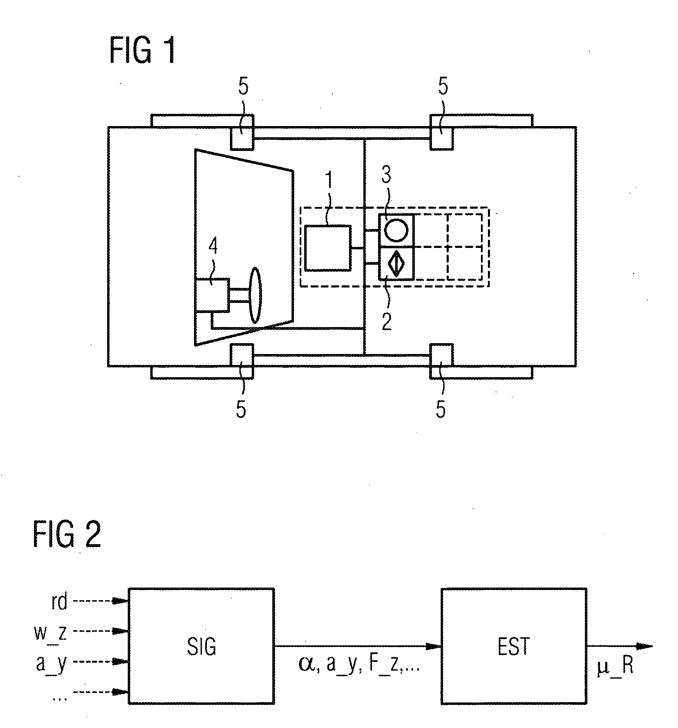

Ein Fahrzeug weist eine Auswertevorrichtung 1 und Sensoren auf (Figur 1). Die Sensoren sind mit der Auswertevorrichtung 1 gekoppelt. Die Sensoren sind insbesondere ausgebildet zum Erfassen von fahrdynamischen Messgrößen. Solche Sensoren sind insbesondere ein Querbeschleunigungssensor 2 zum Erfassen einer erfassten Querbeschleunigung $a\_y$ und/oder ein Gierratensensor 3 zum Erfassen einer erfassten Gierrate $w\_z$ und/oder ein Lenkradwinkelsensor 4 zum Erfassen eines Lenkradwinkels. Ferner ist bevorzugt an jedem Rad des Fahrzeugs ein Raddrehzahlsensor 5 angeordnet zum Erfassen von jeweils einer Raddrehzahl rd. Die Sensoren sind jeweils mit der Auswertevorrichtung 1 gekoppelt und führen dieser die jeweils erfassten Messwerte zu. Ferner können auch weitere Sensoren vorgesehen sein, zum Beispiel ein Längsbeschleunigungssensor.

In der Auswertevorrichtung 1 ist eine Signalaufbereitungseinheit SIG vorgesehen zum Aufbereiten der von den Sensoren der Auswertevorrichtung 1 zugeführten Messwerte (Figur 2). Ferner ist eine Schätzungseinheit EST vorgesehen, die eingangsseitig mit einem Ausgang der Signalaufbereitungseinheit SIG gekoppelt ist. Der Signalaufbereitungseinheit SIG werden insbesondere die erfassten Raddrehzahlen rd, die erfasste Querbeschleunigung $a\_y$ und die erfasste Gierrate $w\_z$ zugeführt. Der Signalaufbereitungseinheit SIG können jedoch auch Messwerte weiterer Messgrößen zugeführt werden.

Das Aufbereiten der jeweiligen Messwerte umfasst beispielsweise ein Filtern und insbesondere ein Tiefpassfiltern und/oder ein Korrigieren oder Umwandeln der erfassten Messwerte. Ferner kann die Signalaufbereitungseinheit SIG dazu ausgebildet sein, abhängig von den zugeführten Messwerten abgeleitete Messgrößen zu ermitteln, beispielsweise unter Berücksichtigung von fahrdynamischen Fahrzeugmodellen oder durch einfaches Verrechnen von zwei oder mehr der erfassten Messwerte unterschiedlicher Messgrößen zu einem Messwert einer aus diesen abgeleiteten Messgröße. Eine solche abgeleitete Messgröße ist beispielsweise eine Fahrzeuggeschwindigkeit v, die abhängig von den erfassten Raddrehzahlen rd ermittelbar ist, oder eine Aufstandskraft $F\_z$, die über ein Rad des Fahrzeugs senkrecht auf die Fahrbahn ausgeübt wird. Ferner ist auch ein Schräglaufwinkel $\alpha$ abhängig von der erfassten Gierrate $w\_z$ ermittelbar. Die genannten abgeleiteten Messgrößen sind jedoch gegebenenfalls auch anders ermittelbar oder erfassbar.

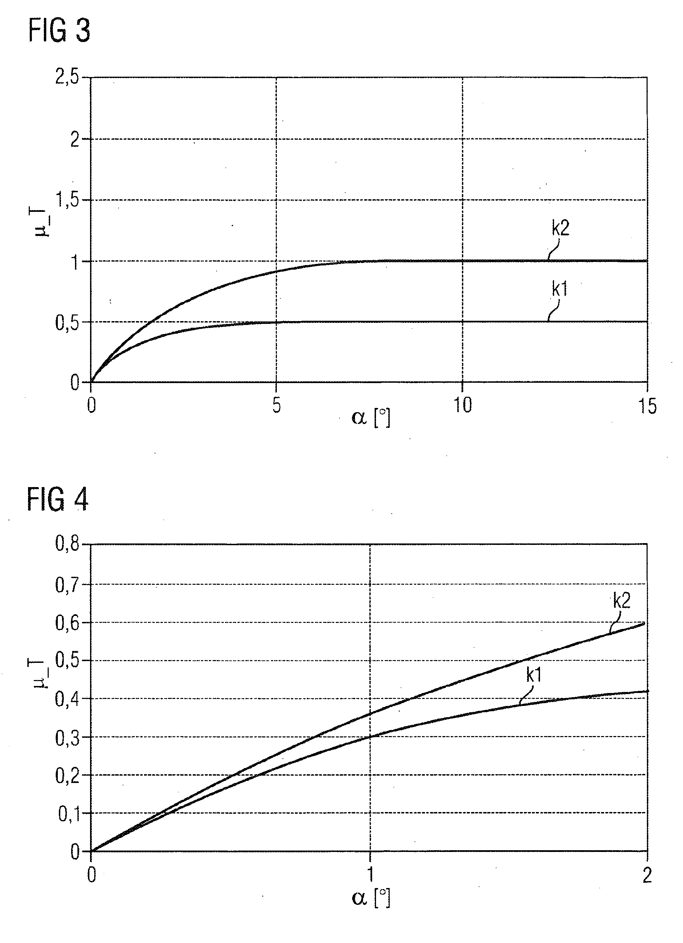

Die Schätzungseinheit EST ist ausgebildet, abhängig von den ihr zugeführten erfassten oder ermittelten Messwerten einen Schätzwert einer Reibkennzahl $\mu\_R$ zwischen mindestens einem Reifen des Fahrzeugs und einer Fahrbahn zu ermitteln. Für das Schätzen der Reibkennzahl $\mu\_R$ wird ein lateraler Reibwert $\mu\_T$ abhängig vom erfassten oder ermittelten Schräglaufwinkel $\alpha$ mittels eines Modells ermittelt. Zwischen dem lateralen Reibwert $\mu\_T$ und dem Schräglaufwinkel $\alpha$ besteht im Modell ein nichtlinearer funktionaler Zusammenhang, der in einer ersten Kurve k1 und einer zweiten Kurve k2 für unterschiedliche Schätzwerte der Reibkennzahl $\mu\_R$ in Figuren 3 und 4 beispielhaft dargestellt ist. Der Schätzwert der Reibkennzahl $\mu\_R$ beträgt für die erste Kurve k1 0,5 und für die zweite Kurve k2 1.

Eine Anfangssteigung des lateralen Reibwerts $\mu\_T$ in Bezug auf den Schräglaufwinkel $\alpha$ ist im Wesentlichen unabhängig vom Schätzwert der Reibkennzahl $\mu\_R$ und ist bevorzugt konstant. In einer besonders bevorzugten Ausführungsform ist der nichtlineare funktionale Zusammenhang zwischen dem lateralen Reibwert $\mu\_T$ und dem Schräglaufwinkel $\alpha$ durch

$$\mu\_T = C1 \cdot (1 - \exp(-C2 \cdot S)) - C3 \cdot S$$

mit

$$S = \mathrm{sqrt}(2 \cdot (1 - \cos(\alpha)))$$

vorgegeben. Dabei repräsentieren exp eine Exponentialfunktion und sqrt eine Quadratwurzel. Ferner ist ein erster Parameter C1 vorgegeben als ein Produkt des Schätzwerts der Reibkennzahl $\mu\_R$ und einer ersten Konstante C1_0 und ist ein zweiter Parameter vorgegeben als ein Quotient aus einer zweiten Konstanten C2_0 und dem Schätzwert der Reibkennzahl $\mu\_R$. Bevorzugt weist die erste Konstante C1_0 einen Wert von etwa 1 auf und weist die zweite Konstante C2_0 einen Wert von etwa 25 auf. Die erste und die zweite Konstante C1_0, C2_0 können jedoch auch anders vorgegeben sein. Ein dritter Parameter C3 weist bevorzugt einen kleinen Wert auf, zum Beispiel etwa 0,2. Für kleine Schräglaufwinkel $\alpha$ und insbesondere in Bezug auf die Anfangssteigung des lateralen Reibwerts $\mu\_T$ in Bezug auf den Schräglaufwinkel $\alpha$ ist der Term -C3 · S vernachlässigbar. In einer besonders bevorzugten Ausführungsform beträgt der Wert des dritten Parameters C3 Null. Das Ermitteln des lateralen Reibwerts $\mu\_T$ ist so besonders einfach.

Durch Bilden einer Reihenentwicklung der Exponentialfunktion und Abbruch nach dem ersten Term ergibt sich für die Exponentialfunktion mit dem Argument -C2 · S die vereinfachte Darstellung 1_C2 · S. Der laterale Reibwert $\mu\_T$ ist dadurch für kleine Schräglaufwinkel $\alpha$ ungefähr gleich C1 · C2 · S = C1_0 · C2_0 · S. Die Anfangssteigung des lateralen Reibwerts $\mu\_T$ in Bezug auf den Schräglaufwinkel $\alpha$ ist somit im Wesentlichen unabhängig vom Schätzwert der Reibkennzahl $\mu\_R$ und ist ferner im Wesentlichen konstant. Ein solcher Zusammenhang zwischen dem lateralen Reibwert $\mu\_T$ und dem Schräglaufwinkel $\alpha$ ermöglicht ein besonders zuverlässiges und robustes Schätzen der Reibkennzahl $\mu\_R$. Der nichtlineare funktionale Zusammenhang zwischen dem lateralen Reibwert $\mu\_T$ und dem Schräglaufwinkel $\alpha$ kann jedoch auch anders vorgegeben sein.

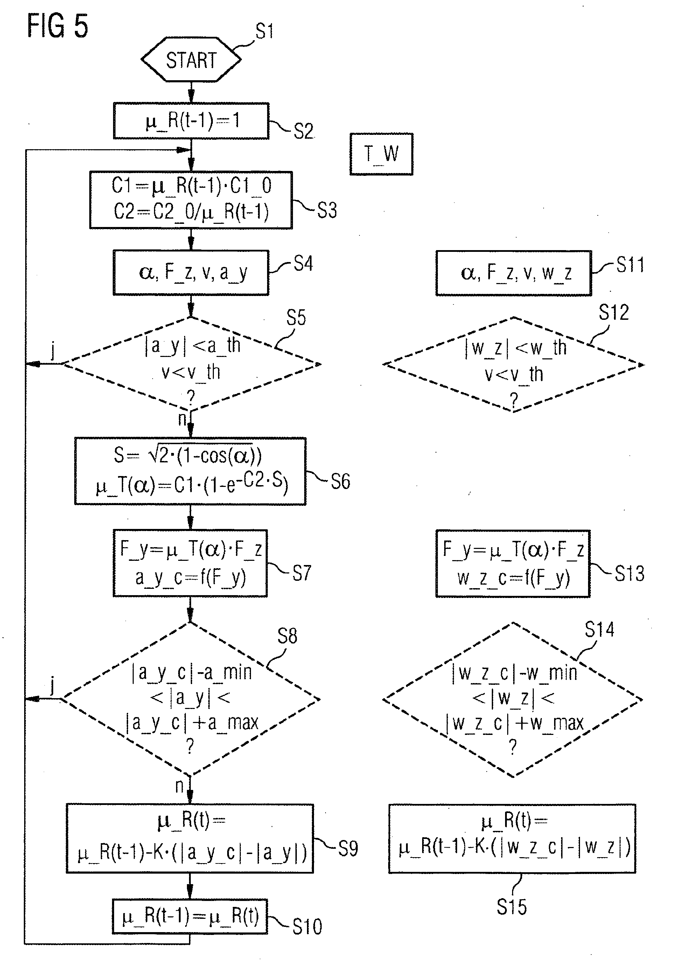

Figur 5 zeigt ein Ablaufdiagramm eines Programms zum Schätzen der Reibkennzahl $\mu\_R$. Das Programm beginnt in einem Schritt S1. In einem Schritt S2 wird der Schätzwert der Reibkennzahl $\mu\_R$ für einen Zeitpunkt t-1 mit einem vorgegebenen Wert belegt, zum Beispiel mit 1.

In einem Schritt S3 wird dem ersten Parameter C1 das Produkt aus dem Schätzwert der Reibkennzahl $\mu\_R$ zum Zeitpunkt t-1 und der ersten Konstante C1_0 zugewiesen. Ferner wird dem zweiten Parameter C2 der Quotient aus der zweiten Konstante C2_0 und dem Schätzwert der Reibkennzahl $\mu\_R$ zum Zeitpunkt t-1 zugewiesen. In einem Schritt S4 werden der Schräglaufwinkel $\alpha$, die Aufstandskraft F_z, die Fahrzeuggeschwindigkeit v und die erfasste Querbeschleunigung a_y erfasst oder ermittelt. In einem Schritt S5 wird vorzugsweise überprüft, ob ein Betrag der erfassten Querbeschleunigung a_y kleiner ist als ein vorgegebener unterer Querbeschleunigungsgrenzwert a_th. Der vorgegebene untere Querbeschleunigungsgrenzwert a_th beträgt beispielsweise etwa 0,5 m/s$^2$, kann jedoch auch größer oder kleiner als 0,5 m/s$^2$ vorgegeben sein. Ferner wird im Schritt S5 vorzugsweise überprüft, ob die Fahrzeuggeschwindigkeit v kleiner ist als ein vorgegebener unterer Geschwindigkeitsgrenzwert v_th. Der vorgegebene untere Geschwindigkeitsgrenzwert v_th beträgt beispielsweise etwa 5 m/s, kann jedoch auch größer oder kleiner als 5 m/s vorgegeben sein. Sind die Bedingungen im Schritt S5 erfüllt, dann wird das Programm im Schritt S3 fortgesetzt.

Sind die Bedingungen im Schritt S5 jedoch nicht erfüllt, dann wird in einem Schritt S6 der laterale Reibwert $\mu\_T$ abhängig vom Schräglaufwinkel $\alpha$ ermittelt. In einem Schritt S7 wird eine ermittelte Querbeschleunigung a_y_c abhängig vom ermittelten lateralen Reibwert $\mu\_T$ als eine fahrdynamische Modellgröße ermittelt und vorzugsweise durch Tiefpassfiltern geglättet. Beispielsweise wird eine Querkraft F_y als Produkt aus dem ermittelten lateralen Reibwert $\mu\_T$ und der Aufstandskraft F_z ermittelt. Die ermittelte Querbeschleunigung a_y_c kann dann abhängig von der ermittelten Querkraft F_y ermittelt werden.

In einem Schritt S8 wird vorzugsweise überprüft, ob die erfasste Querbeschleunigung a_y innerhalb eines vorgegebenen Toleranzbandes um die ermittelte Querbeschleunigung a_y_c liegt. Eine untere Grenze des vorgegebenen Toleranzbandes ist als eine Differenz eines Betrags der ermittelten Querbeschleunigung a_y_c und eines unteren Beschleunigungstoleranzgrenzwerts a_min vorgegeben. Entsprechend ist eine obere Grenze des vorgegebenen Toleranzbandes durch eine Summe des Betrags der ermittelten Querbeschleunigung a_y_c und eines oberen Beschleunigungstoleranzgrenzwerts a max vorgegeben. Liegt der Betrag der erfassten Querbeschleunigung a_y innerhalb des vorgegebenen Toleranzbandes, dann wird das Programm im Schritt S3 fortgesetzt. Andernfalls wird in einem Schritt S9 der Schätzwert der Reibkennzahl $\mu\_R$ angepasst. Das Anpassen des Schätzwerts der Reibkennzahl $\mu\_R$ erfolgt so, dass dem Schätzwert der Reibkennzahl $\mu\_R$ zu einem Zeitpunkt t eine Differenz des Schätzwerts der Reibkennzahl $\mu\_R$ zu dem Zeitpunkt t-1 und eines Produkts aus einem Faktor K und einer Differenz des Betrags der ermittelten Querbeschleunigung a_y_c und des Betrags der erfassten Querbeschleunigung a_y zugewiesen wird. In einem Schritt S10 wird ferner für einen nachfolgenden Anpassungsschritt gemäß den Schritten S3 bis S9 dem Schätzwert der Reibkennzahl $\mu\_R$ zum Zeitpunkt t-1 der Schätzwert der Reibkennzahl $\mu\_R$ zum Zeitpunkt t zugewiesen. Das Programm wird im Schritt S3 fortgesetzt. Auf diese Weise wird der Schätzwert der Reibkennzahl $\mu\_R$ rekursiv ermittelt.

Vorzugsweise wird das Programm erst nach Ablauf einer Wartezeitdauer T_W fortgesetzt. Die Wartezeitdauer T_W entspricht beispielsweise einem Abtastintervall, in dem die Messwerte erfasst oder ermittelt werden, oder einem vorgegebenen Zeitintervall für das Anpassen und somit Aktualisieren des Schätzwerts der Reibkennzahl μ_R. Der Faktor K ist beispielsweise vorgegeben als etwa 1,5 s/m · T_W. Der Faktor K kann jedoch auch anders vorgegeben sein.

Das Programm kann entsprechend auch durchgeführt werden, wenn anstatt der erfassten und der ermittelten Querbeschleunigung a_y, a_y_c die erfasste und eine ermittelte Gierrate w_z, w_z_c für das Schätzen der Reibkennzahl μ_R genutzt werden. Dazu ist beispielsweise anstatt des Schritts S4 ein Schritt S11 vorgesehen, in dem der Schräglaufwinkel α, die Aufstandskraft F_z, die Fahrzeuggeschwindigkeit v und die erfasste Gierrate w_z erfasst oder ermittelt werden. In einem Schritt S12, der den Schritt S5 ersetzt, wird überprüft, ob ein Betrag der erfassten Gierrate w_z kleiner ist als ein vorgegebener unterer Gierratengrenzwert w_th und ob die Fahrzeuggeschwindigkeit kleiner ist als der vorgegebene untere Geschwindigkeitsgrenzwert v_th. Anstatt des Schritts S7 ist ein Schritt S13 vorgesehen, in dem die ermittelte Gierrate w_z_c als eine fahrdynamische Modellgröße abhängig vom ermittelten lateralen Reibwert μ_T ermittelt und bevorzugt durch Tiefpassfiltern geglättet wird. Anstatt des Schritts S8 ist ein Schritt S14 vorgesehen, in dem überprüft wird, ob ein Betrag der erfassten Gierrate w_z innerhalb eines vorgegebenen Toleranzbandes um die ermittelte Gierrate w_z_c liegt. Eine untere Grenze des vorgegebenen Toleranzbandes ist vorgegeben durch eine Differenz eines Betrags der ermittelten Gierrate w_z_c und eines unteren Gierratentoleranzgrenzwerts w_min. Eine obere Grenze des vorgegebenen Toleranzbandes ist vorgegeben durch eine Summe des Betrags der ermittelten Gierrate w_z_c und eines oberen Gierratentoleranzgrenzwerts w_max. Anstatt in einem Schritt S9 erfolgt das Anpassen des Schätzwerts der Reibkennzahl μ_R in einem Schritt S15. Dem Schätzwert der Reibkennzahl μ_R zum Zeitpunkt t wird im Schritt S15 eine Differenz des Schätzwerts der Reibkennzahl μ_R zum Zeitpunkt t-1 und eines Produkts aus dem Faktor K und einer Differenz des Betrags der ermittelten Gierrate w_z_c und des Betrags der erfassten Gierrate w_z zugeführt.

Entsprechend kann das Programm auch durchgeführt werden, wenn anstatt der erfassten und der ermittelten Querbeschleunigung a_y, a_y_c oder der erfassten und der ermittelten Gierrate w_z, w_z_c für das Schätzen der Reibkennzahl μ_R andere fahrdynamische Größen genutzt werden, die als Messgröße erfassbar und als Modellgröße ermittelbar sind. Solche anderen fahrdynamischen Größen sind zum Beispiel eine Gierbeschleunigung oder ein Giermoment.

**Patentansprüche**

1. Verfahren zum Schätzen einer Reibkennzahl (μ_R) zwischen mindestens einem Reifen eines Fahrzeugs und einer Fahrbahn, bei dem

   - ein Schräglaufwinkel (α) erfasst oder ermittelt wird,
   - ein lateraler Reibwert (μ_T) zwischen dem mindestens einen Reifen des Fahrzeugs und der Fahrbahn mittels eines Modells ermittelt wird, in dem ein funktionaler Zusammenhang zwischen dem lateralen Reibwert (μ_T) und dem Schräglaufwinkel (α) derart vorgegeben ist, dass ein nichtlinearer Verlauf des lateralen Reibwerts (μ_T) in Bezug auf den Schräglaufwinkel (α) abhängig ist von einer Anfangssteigung des lateralen Reibwerts (μ_T) in Bezug auf den Schräglaufwinkel (α) und von einem rekursiv ermittelten Schätzwert der Reibkennzahl (μ_R) und dass die Anfangssteigung unabhängig vom rekursiv ermittelten Schätzwert der Reibkennzahl (μ_R) ist,
   - eine fahrdynamische Messgröße des Fahrzeugs erfasst wird,
   - abhängig vom lateralen Reibwert (μ_T) eine der fahrdynamischen Messgröße entsprechende fahrdynamische Modellgröße ermittelt wird und eine Abweichung zwischen der fahrdynamischen Messgröße und der fahrdynamischen Modellgröße ermittelt wird und
   - die Rekursion beim Ermitteln des Schätzwerts der Reibkennzahl (μ_R) umfasst, dass dieser abhängig von der ermittelten Abweichung angepasst wird.

2. Verfahren nach Anspruch 1, bei dem der funktionale Zusammenhang im Modell durch

$$\mu\_T = C1 \cdot (1 - \exp(-C2 \cdot S)) - C3 \cdot S$$

mit

$$S = \operatorname{sqrt}(2 \cdot (1 - \cos(\alpha)))$$

und

$$C1 = \mu\_R \cdot C1\_0$$

und

$$C2 = C2\_0 / \mu\_R$$

mit einer ersten und einer zweiten Konstanten (C1_0, C2_0) vorgegeben ist.

3. Vorrichtung zum Schätzen einer Reibkennzahl ($\mu$_R) zwischen mindestens einem Reifen eines Fahrzeugs und einer Fahrbahn, die ausgebildet ist

- zum Erfassen oder Ermitteln eines Schräglaufwinkels ($\alpha$),
- zum Ermitteln eines lateralen Reibwerts ($\mu$_T) zwischen dem mindestens einen Reifen des Fahrzeugs und der Fahrbahn mittels eines Modells, in dem ein funktionaler Zusammenhang zwischen dem lateralen Reibwert ($\mu$_T) und dem Schräglaufwinkel ($\alpha$) derart vorgegeben ist, dass ein nichtlinearer Verlauf des lateralen Reibwerts ($\mu$_T) in Bezug auf den Schräglaufwinkel ($\alpha$) abhängig ist von einer Anfangssteigung des lateralen reibwert ($\mu$_T) in Bezug auf den Schräglaufwinkel ($\alpha$) und von einem rekursiv ermittelten Schätzwert der Reibkennzahl ($\mu$_R) und dass die Anfangssteigung unabhängig vom rekursiv ermittelten Schätzwert der Reibkennzahl ($\mu$_R) ist,
- zum Erfassen einer fahrdynamischen Messgröße des Fahrzeugs,
- zum Ermitteln einer der fahrdynamischen Messgröße entsprechenden fahrdynamische Modellgröße abhängig vom lateralen Reibwert ($\mu$_T) und zum Ermitteln einer Abweichung zwischen der fahrdynamischen Messgröße von der fahrdynamischen Modellgröße und
- zum rekursiven Ermitteln des Schätzwerts der Reibkennzahl ($\mu$_R) und die Rekursion umfasst, dass der Schätzwert der Reibkennzahl abhängig von der ermittelten Abweichung angepasst wird.

**Claims**

1. Method for estimating a coefficient of friction ($\mu$_R) between at least one tire of a motor vehicle and a roadway, in which

- a drift angle ($\alpha$) is detected or determined,
- a lateral friction value ($\mu$_T) between the at least one tire of the motor vehicle and the roadway is determined by means of a model in which a functional relationship between the lateral friction value ($\mu$_T) and the drift angle ($\alpha$) is predetermined such that a non-linear curve of the lateral friction value ($\mu$_T) in relation to the drift angle ($\alpha$) is dependent on an initial increase in the lateral friction value ($\mu$_T) in relation to the drift angle ($\alpha$) and on a recursively determined estimated value of the coefficient of friction ($\mu$_R) and that the initial increase is independent of the recursively determined estimated value of the coefficient of friction ($\mu$_R),
- a driving dynamics variable of the motor vehicle is detected,
- depending on the lateral friction value ($\mu$_T) a driving dynamics model variable corresponding to the driving dynamics variable is determined and a deviation between the driving dynamics variable and the driving dynamics model variable is determined and
- the recursion on determining the estimated value of the coefficient of friction ($\mu$_R) includes said value being adapted as a function of the deviation determined.

2. Method according to claim 1, in which the functional relationship in the model is predefined by

$$\mu\_T = C1 \cdot (1 - \exp(-C2 \cdot S)) - C3 \cdot S$$

with

$$S = \text{sqrt}(2 \quad (1 - \cos(\alpha)))$$

and

$$C1 = \mu\_R \cdot C1\_0$$

and

$$C2 = C\_0 / \mu\_R$$

with a first and a second constant (C1_0, C2_0).

3. Device for estimating a coefficient of friction ($\mu$_R) between at least one tire of a motor vehicle and a roadway, which is embodied

- for detecting or determining a drift angle ($\alpha$),
- for determining a lateral friction value ($\mu$_T) between the at least one tire of the motor vehicle and the roadway by means of a model in which a functional relationship between the lateral friction value ($\mu$_T) and the drift angle ($\alpha$) is predetermined such that a non-linear curve of the lateral friction value ($\mu$_T) in relation to the drift angle ($\alpha$) is dependent on an initial increase in the lateral friction value ($\mu$_T) in relation to the drift angle ($\alpha$) and on a recursively determined estimated value of the coefficient of friction ($\mu$_R) and that the initial increase is independent of the recursively determined estimated value of the coefficient of friction ($\mu$_R),
- for detecting a driving dynamics variable of the motor vehicle,
- for detecting a driving dynamics model variable corresponding to the driving dynamics variable depending on the lateral friction value ($\mu$_T) and for determining a deviation between the driving dynamics variable and the driving dynamics model variable and
- for recursively determining the estimated value of the coefficient of friction ($\mu$_R) and the recursion including the estimated value of the coefficient of friction being adapted as a function of the deviation determined.

**Revendications**

1. Procédé pour estimer un coefficient de frottement ($\mu$_R) entre au moins un pneumatique d'un véhicule automobile et une chaussée, au cours duquel

- on mesure ou on détermine un angle de dérive du pneumatique ($\alpha$),
- on détermine une valeur de frottement latéral ($\mu$_T) entre ledit au moins un pneumatique du véhicule automobile et la chaussée au moyen d'un modèle dans lequel une relation fonctionnelle entre la valeur de frottement latéral ($\mu$_T) et l'angle de dérive du pneumatique ($\alpha$) est prédéterminée de telle manière qu'une évolution non linéaire de la valeur de frottement latéral ($\mu$_T) par rapport à l'angle de dérive du pneumatique ($\alpha$) soit dépendante d'un accroissement initial de la valeur de frottement latéral ($\mu$_T) par rapport à l'angle de dérive du pneumatique ($\alpha$) et d'une valeur estimée, déterminée de façon récursive, du coefficient de frottement ($\mu$_R) et d'une manière telle que l'accroissement initial soit indépendant de la valeur estimée du coefficient de frottement ($\mu$_R) déterminée de façon récursive, ,
- on détermine une grandeur de mesure relative à la dynamique de mouvement du véhicule automobile,
- en fonction de la valeur de frottement latéral ($\mu$_T), on détermine une grandeur de modèle, relative à la dynamique de mouvement, qui correspond à la grandeur de mesure, relative à la dynamique de mouvement, et on détermine un écart entre la grandeur de mesure, relative à la dynamique de mouvement, et la grandeur de modèle, relative à la dynamique de mouvement.,
- la récursivité lors de la détermination de la valeur estimée du coefficient de frottement ($\mu$_R) impliquant d'adapter celle-ci en fonction de l'écart ainsi déterminé.

**2.** Procédé selon la revendication 1 dans lequel la relation fonctionnelle dans le modèle est donnée par

$$\mu\_T = C1 \cdot (1 - exp (-C2 \cdot S)) - C3 \cdot S$$

avec

$$S = sqrt (2 \cdot (1 - cos(\alpha)))$$

et

$$C1 = \mu\_R \cdot C1\_0$$

et

$$C2 = C2\_0 / \mu\_R$$

Avec une première et une deuxième constante (C1_0, C2_0).

**3.** Dispositif pour estimer un coefficient de frottement ($\mu$_R) entre au moins un pneumatique d'un véhicule automobile et une chaussée, qui est conçu pour

- mesurer ou déterminer un angle de dérive de pneumatique ($\alpha$),
- déterminer une valeur de frottement latéral ($\mu$_T) entre ledit au moins un pneumatique du véhicule automobile et la chaussée au moyen d'un modèle dans lequel une relation fonctionnelle entre la valeur de frottement latéral ($\mu$_T) et l'angle de dérive du pneumatique ($\alpha$) est prédéterminée de telle manière qu'une évolution non linéaire de la valeur de frottement latéral ($\mu$_T) par rapport à l'angle de dérive du pneumatique ($\alpha$) soit dépendante d'un accroissement initial de la valeur de frottement latéral ($\mu$_T) par rapport à l'angle de dérive du pneumatique ($\alpha$) et d'autre part d'une valeur estimée, déterminée de façon récursive, du coefficient de frottement ($\mu$_R) et de telle manière que l'accroissement initial soit indépendant de la valeur estimée du coefficient de frottement ($\mu$_R), déterminée de façon récursive,
- déterminer une grandeur de mesure relative à la dynamique de mouvement du véhicule automobile,
- déterminer une grandeur de modèle, dynamique relative à la dynamique du mouvement, qui correspond à la grandeur de mesure, relative à la dynamique de mouvement, en fonction de la valeur de frottement latéral ($\mu$_T), et déterminer un écart entre la grandeur de mesure, relative à la dynamique de mouvement, et la grandeur de modèle, relative à la dynamique de mouvement,
- déterminer de façon récursive la valeur estimée du coefficient de frottement ($\mu$_R), la récursivité impliquant d'adapter la valeur estimée en fonction de l'écart ainsi déterminé.

FIG 1

FIG 2

FIG 3

FIG 4

**FIG 5**

S1 START

S2 — $\mu\_R(t-1)=1$

T_W

S3 — $C1=\mu\_R(t-1)\cdot C1\_0$
$C2=C2\_0/\mu\_R(t-1)$

S4 — $\alpha,\ F\_z,\ v,\ a\_y$

S5 — $|a\_y|<a\_th$
$v<v\_th$
?

S11 — $\alpha,\ F\_z,\ v,\ w\_z$

S12 — $|w\_z|<w\_th$
$v<v\_th$
?

S6 — $S=\sqrt{2\cdot(1-\cos(\alpha))}$
$\mu\_T(\alpha)=C1\cdot(1-e^{-C2\cdot S})$

S7 — $F\_y=\mu\_T(\alpha)\cdot F\_z$
$a\_y\_c=f(F\_y)$

S13 — $F\_y=\mu\_T(\alpha)\cdot F\_z$
$w\_z\_c=f(F\_y)$

S8 — $|a\_y\_c|-a\_min$
$<|a\_y|<$
$|a\_y\_c|+a\_max$
?

S14 — $|w\_z\_c|-w\_min$
$<|w\_z|<$
$|w\_z\_c|+w\_max$
?

S9 — $\mu\_R(t)=$
$\mu\_R(t-1)-K\cdot(|a\_y\_c|-|a\_y|)$

S15 — $\mu\_R(t)=$
$\mu\_R(t-1)-K\cdot(|w\_z\_c|-|w\_z|)$

S10 — $\mu\_R(t-1)=\mu\_R(t)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3912014 A1

- EP 1627790 A1